# EUROPEAN PATENT APPLICATION

(11) **EP 1 548 085 A1**
(43) Date of publication of application: **29.06.2005**
(21) Application number: 03754003.6
(22) Date of filing: 03.10.2003
(51) Int. Cl.: C09K 3/10, F16J 15/10, F02F 7/00

(54) **SEALING MATERIAL**

(30) Priority: 04.10.2002 JP 2002291906; 04.10.2002 JP 2002291907; 04.10.2002 JP 2002291909; 04.10.2002 JP 2002291910; 04.10.2002 JP 2002291912; 04.10.2002 JP 2002291914
(71) Applicant: NOK Corporation, Tokyo 105-8585 (JP); KANEKA CORPORATION, Osaka-shi, Osaka 530-8288 (JP)
(72) Inventor: KUDO, Masashi, Fujisawa-shi, Kanagawa 251-0042 (JP); FUJIMOTO, Kenichi, Fujisawa-shi, Kanagawa 251-0042 (JP); KOGA, Atsushi, Fujisawa-shi, Kanagawa 251-0042 (JP); KOJIMA, Yoshifumi, Fujisawa-shi, Kanagawa 251-0042 (JP); ANDO, Osamu, Fujisawa-shi, Kanagawa 251-0042 (JP); NAKAGAWA, Yoshiki, Settsu-shi, Osaka 566-0072 (JP)
(74) Representative: HOFFMANN EITLE
(86) International application number: PCT/JP2003/012716
(87) International publication number: WO 2004/031315

(57) **Abstract**

A sealing material, which comprises a curing product of a composition comprising (A) an acrylic polymer having at least one alkenyl group capable of undergoing hydrosilylation reaction, (B) a hydrosilyl group-containing compound and (C) a hydrosilylation catalyst as essential components, is suitable for use as cam cover seals and oil pan seals for automobile engines, fuel cell cooling medium seals, automobile wire harnesses seals, HDD cover gasket or vibration-insulating HDD cover gasket seals, etc.

## Description

### TECHNICAL FIELD

The present invention relates to a sealing material and more particularly a sealing material for use as cam cover seals and oil pan seals for automobile engines, fuel cell cooling medium seals, automobile wire harnesses seals, HDD cover gasket or vibration-insulating HDD cover gasket seals etc.

### BACKGROUND ART

(1) Automobile engine cams are usually provided with cam covers for protecting cams in such a manner as if covers were placed on the engine blocks to prevent intrusion of dusts, etc. from the outside or to prevent scattering of lubricating oil from the inside, where sealing materials for sealing the gaps between the engine blocks and cam covers are used as cam cover sealing materials.
   Cam cover sealing materials so far used in such applications comprise an acrylic rubber having a Duro A hardness of 60 ~ 80. However, due to the recent demands for energy saving, lighter weight, etc. cam cover materials are now shifting from metallic materials to resin materials. In case of metallic cam covers, ordinary rubber seals having a rather higher hardness can maintain a satisfactory sealing performance, but in case of cam covers of resin materials, the ordinary rubber seals undergo deformation of resin materials due to the sealing surface pressure, resulting in such inconveniences as leakage from the seals, etc. Such inconveniences have become a problem.
   The cam cover seals are usually large in size, and it is preferable to make them by injection molding from the viewpoint of production efficiency, but the ordinary acrylic rubber compositions for use as sealing materials have problems as to flowability, vulcanization speed, etc. Another problem of poor injection moldability has also arisen.
(2) Lubricating oil for use in the automobile engine is pooled in an oil pan, i.e. an oil reservoir, positioned below the engine, and at the same time when the engine starts to operate, a portion of engine power is used to circulate the oil in the oil pan, i.e. the oil is pumped up from the oil pan and delivered to the lubrication parts under pumping pressure. After the lubrication, the oil falls into the oil pan as oil drops or by downward flowing along the wall to repeat the oil circulation.
   To seal gaps between the edges of an oil pan working as an oil reservoir of the automobile engine and an engine block, a silicone potting material has been so far used. The silicone potting material is usually in a liquid state and soft, and thus has such advantages as assurance of appropriate heat resistance, low temperature resistance, oil resistance, etc., because the material itself is silicone rubber, but has such disadvantages as the necessity of additional steps of applying the sealing material at the time of engine assembling and successive curing, and the incapability of easy exchange.
   Rubber seals are available as easy-to-exchange sealing materials, but the rubber seals are generally hard and require a higher surface pressure for sealing, as compared with the potting material, resulting in a problem as to workability.
(3) Fuel cell gaskets have a necessity for down-sizing for mounting on automobiles, etc. The fuel cell is usually in a stacked structure on the whole, and thus the structural members require a lighter weight and a smaller thickness. Accordingly, the gasket materials as seal parts also require a lighter weight and a smaller thickness. Furthermore, brittle members such as carbon plates are used for separators, etc., and thus the brittle members must be prevented from breakage. Still furthermore, the gasket materials must have a lower camber force, because the resulting ligher weight and smaller thickness of support members lead to easy occurrence of deformation. Thus, the gasket materials must have a low viscosity before the curing so that they can be molded thinly and uniformly, and also must have a low hardness and lower camber force after the curing-molding.
   The fuel cell utilizes gases such as hydrogen and oxygen for using electricity generation, and thus it is desirable that the gasket materials have a high gas shieldability. To cool the fuel cell, LLC (long life coolant), a methanol-water mixture, etc. have been so far used. To improve reaction efficiency, higher reaction temperatures such as about 150° ~ about 180°C have been used up to now even in PEM type fuel cells. However, such cooling liquids as aqueous LLC, methanol-water mixture, etc. cannot meet such higher reaction temperatures, and thus cooling must be carried out by circulation of cooling medium oil having a high heat resistance such as mineral oil, silicone oil, etc. Accordingly, the gasket materials as seal parts in the cooling medium circulation system require a cooling medium oil resistance.
   In the conventional fuel cell seals, liquid silicone rubber or fluoroelastomer having a low viscosity has been so far used. Even if the liquid silicone rubber can have a low hardness before the cross-linking and a low hardness after the cross-linking, the shieldability to such gases as hydrogen, oxygen, etc. as a sealing target is not satisfactory, so that the gas permeability is high. This is a problem. Furthermore, the liquid silicone rubber has a poor oil resistance, so that a cooling medium oil cannot be used as a cooling liquid. This is also another problem.
   On the other hand, the fluoroelastomer is satisfactory with respect to the oil resistance and gas shieldability but in case of millable type, the pre-cross-linking viscosity cannot be sufficiently made lower, and it is hard to mold thin gaskets and also to obtain a sufficiently lower hardness. This is also true of the case of using millable type acrylic rubber having good heat resistance and oil resistance. Liquid type fluoroelastomer having a low pre-cross-linking viscosity can solve these problems but still suffers from a very high material cost. In these situations, sealing materials having a low viscosity before cross-linking and a low hardness, good gas shieldability and oil resistance after cross-linking are now in demand.
(4) As sealing materials for wire harnesses used in electric wiring of automobiles, industrial machinery, etc., silicone rubber has been mainly used so far, but the silicone rubber has such problems as poor adhesiveness to wires and poor oil resistance when used in the engine room, etc. Furthermore, in the case of the silicone rubber of a lower hardness, scratches are liable to occur at the time of wire insertion because of the low mechanical strength, resulting in a problem of poor sealability.
   Particularly the sealing material for automobile wire harnesses requires the following characteristics.
   (a) Good heat resistance and ozone resistance corresponding to the automobile using circumstances,
   (b) Distinguished compression set characteristics governing a sealability,
   (c) Distinguished tight adhesiveness to electric wires,
   (d) Less insertion resistance at the time of electric wire insertion and low hardness, and
   (e) No occurrence of cracks on the seals even if the seals are damaged at the time of electric wire insertion.

   With recent higher performances of automobiles, a higher temperatures than those so far used have been employed, and thus the wire harnesses are in increasing demand for a sufficiently high sealability under the heat-resistant and oil-resistant circumstances.
(5) With recent down-sizing and higher performance of electronic devices, down-sizing and smaller thickness of structural members are now in demand. Down-sizing of structural members makes worse the assembling work efficiency in the production step, and thus integration or complexing of various parts is now desired. At the same time, improvements in performances of required characteristics such as sealability, out gassing property, quality, etc. are also desired.
   Gaskets for electronic memory devices, particularly hard disc drive (HDD) are fixed to casing in such a manner as to sandwich a simple rubber material or a foamed urethane sheet between metallic covers such as stainless steel covers, aluminum covers, etc. By integrating the metallic covers with a rubber material, for which fluoroelastomer is mainly used, the assembling work efficiency can be improved. In this connection, it has been proposed to bond the metal to the rubber by an adhesive (Japanese Patent No. 2,517,797). Furthermore, EPDM has been practically used in the similar method as a rubber material.
   On the trend toward down-sizing of products and lighter weight and smaller thickness of covers, the gasket materials as sealing members are also requiring a lower camber force (lower hardness). When the covers can be made to have a lighter weight and a smaller thickness and when the gaskets have a higher hardness (camber force) at the time of product assembling, rather the covers are liable to be deformed to spoil the sealability.
   A gasket material made from a styrene type thermoplastic elastomer has been also proposed (Japanese Patent No. 2,961,068). The thermoplastic elastomer requires no vulcanization step in contrast to the rubber material, and thus the process steps can be simplified, and recycling of the materials can be made because of its thermoplastic material nature, leading to reduction in cost.
   In the proposed method, the work efficiency in the actual HDD assembling work will be much poorer, unless the thin, soft and easily adhesive gaskets have been fixed in advance by some means. In actual practice a gasket of styrene type thermoplastic elastomer is injection-molded to the so called frame in advance and then the frame is inserted into between the casing and the cover of HDD, etc. to conduct integration. That is, the third member, i.e. the frame, is required in the proposed method.
   The gasket material is in some cases, exposed to severe circumstances at higher temperatures (particularly 80°C or higher) due to heat generation caused by recent higher performance (higher rpm) of HDD or mounting on automobiles. In that case, the conventional styrene type thermoplastic elastomer has performance-wise some limit. Basically, the thermoplastic elastomer has a tendency for the permanent deformation to increase under high temperature conditions due to its nature, as compared with the rubber, and consequently when the thermoplastic elastomer is kept in a fastened state for a long time under the high temperature conditions, the sealability will be poorer due to the occurrence of permanent deformation.
(6) Electronic devices have been subject to more and more improvement to meet the down-sizing and higher performance requirements. The down-sizing of electronic memory devices such as CD, DVD, HDD, etc., particularly HDD, are likewise in progress from 3.5 inches to 2.5 inches, and further to 1 inch. Likewise, the performance improvement (memory capacity upgrading) is in progress.

For the performance improvements, individual increases in rpm of HDD, memory density and number of mountable discs are effective, but the increase in the memory density has already approached its limit, whereas the increase in the number of mountable discs is against the down-sizing tendency and is not preferable. Thus, the increase in the rpm of HDD is now in the main stream of improvement.

Consequently, vibrations generated from the disc inside are in an increasing tendency and it is the important task to reduce such vibrations. Particularly, when HDD is used as a server, several tens of HDDs are used in series, and troubles due to vibrations generated from the individual HDDs are sometimes observable.

On the other hand, HDD as electronic memory devices has been recently used in video cameras, car navigators, etc. besides personal computers, and particularly HDD used under the circumstances generating so many vibrations, such as mounting in automobiles, etc. must be prevented from vibrations from the HDD outside. Furthermore, heat resistance to internal heat generation due to high speed revolution and exposure to the high temperature circumstances in automobiles in the summer season is also desired.

### DISCLOSURE OF THE INVENTION

The main object of the present invention is to provide a sealing material for use as cam cover seals and oil pan seals for automobile engines, fuel cell cooling medium seals, automobiles wire harnesses seals, HDD cover gasket or vibration-insulating HDD cover gasket seal, etc.

More particularly, the first object of the present invention is to provide a sealing material for cam cover, which can maintain a sufficient sealability even if used as a resin-made cam cover, where the composition for forming curing products has a good flowability and a distinguished injection moldability, because an acrylic sealing material of low hardness is used as a cam cover sealing material.

The second object of the present invention is to provide an oil pan sealing material, which can give an oil pan gasket, etc. capable of sealing under surface pressure as low as that of a silicone potting material and capable of easy exchange, because an acrylic sealing material of low hardness is used as an oil pan sealing material.

The third object of the present invention is to provide a clean sealing material for a fuel cell cooling medium which has a gas shieldability, a resistance to cooling medium oil, etc. and is capable of giving molding products with a lighter weight and a smaller thickness by using a curable composition having a low pre-curing viscosity, and a low post-curing hardness and a camber force.

The fourth object of the present invention is to provide a wire harnesses sealing material for automobiles with distinguished heat and oil resistances, and tight adhesiveness to electric wires.

The fifth object of the present invention is to provide an HDD cover gasket comprising a thermosetting elastomer having a low hardness to improve the sealability and capable of maintaining the sealability even under high temperature conditions, and is also capable of forming an injection molding-integrated gasket with an easy, efficient moldability.

The sixth object of the present invention is to provide a sealing material for vibration-insulating HDD cover gaskets, which comprises a thermosetting elastomer having a low hardness to improve the sealability and capable of maintaining the sealability even under high temperature conditions, and is capable of forming an injection molding-integrated gasket with an easy, efficient moldability, giving a distinguished vibration iusulation property to HDD even if mounted on automobiles.

The main object of the present invention can be attained by a sealing material, which comprises a curing product of a composition comprising (A) an acrylic polymer having at least one alkenyl group capable of undergoing hydrosilylation reaction, (B) a hydrosilyl group-containing compound and (C) a hydrosilylation catalyst as essential components.

An acrylic acid ester monomer, which constitutes the main chain of acrylic polymer having at least one alkenyl group capable of undergoing hydrosilylation reaction, preferably at least one alkenyl group at a terminal position of the polymer, as component (A), is not particularly limited, and can be used upon selection of desired one.

For example, such acrylic acid ester monomers can be used as acrylic acid esters such as methyl acrylate, ethyl acrylate, propyl acrylate, isopropyl acrylate, n-butyl acrylate, isobutyl acrylate, t-butyl acrylate, n-pentyl acrylate, n-hexyl acrylate, cyclohexyl acrylate, n-heptyl acrylate, n-octyl acrylate, 2-ethylhexyl acrylate, nonyl acrylate, decyl acrylate, dodecyl acrylate, phenyl acrylate, tolyl acrylate, benzyl acrylate, 2-methoxyethyl acrylate, 3-methoxybutyl acrylate, 2-hydroxyethyl acrylate, 2-hydroxypropyl acrylate, stearyl acrylate, glycidyl acrylate, 2-aminoethyl acrylate, trifluoromethylmethyl acrylate, 2-trifluoromethylethyl acrylate, 2-perfluoroethylethyl acrylate, 2-perfluoroethyl-2-perfluorobutylethyl acrylate, perfluoroethyl acrylate, perfluoromethyl acrylate, diperfluoromethylmethyl acrylate, 2-perfluoromethyl-2-perfluoroethylethyl acrylate, 2-perfluorohexylethyl acrylate, 2-perfluorodecylethyl acrylate, 2-perfluorohexadecylethyl acrylate, etc., or methacrylic acid esters corresponding thereto, ethylene oxide adducts of acrylic acid, γ-(methacryloyloxypropyl)-trimethoxysilane, etc. Acrylic acid or methacrylic acid can be also used.

Above all, acrylic acid esters or methacrylic acid esters can be preferably used from the viewpoint of product physical properties, etc. It is particularly preferable to use one or a combination of at least two of acrylic acid esters, for example, butyl acrylate, ethyl acrylate, 2-methoxyethyl acrylate, 2-ethoxyethyl acrylate, etc.

In the present invention, these preferable monomers can be subjected to random copolymerization or block copolymerization with other monomers, where it is preferable that acrylic acid esters or methacrylic acid esters as the preferable monomers are copolymerized in a proportion of 60% by weight or more.

Together with these acrylate-based or methacrylate-based monomers, other monomers can be subjected to the copolymerization in a proportion of about 30% by weight or less. Such monomers include, for example, styrene-based monomers such as styrene, vinyltoluene, α-methylstyrene, chlorostyrene, styrenesulfonic acid or its salts, etc.; fluorine-containing vinyl monomers such as perfluoroethylene, perfluoropropylene, vinylidene fluoride, etc.; silicon-containing vinyl-based monomers such as vinyltrimethoxysilane, vinyltriethoxysilane, etc.; maleic acid anhydride, maleic acid and monoalkyl esters or dialkyl esters of maleic acid; fumaric acid and monoalkyl esters or dialkyl esters of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide, etc.; nitrile group-containing vinyl-based monomers such as acrylonitrile, methacrylonitrile, etc.; amide group-containing vinyl-based monomers such as acrylamide, methacrylamide, etc.; vinyl esters such as vinyl acetate, vinyl propionate, vinyl pivalate, vinyl benzoate, vinyl cinnamate, etc.; olefins such as ethylene, propylene, etc.; conjugated dienes such as butadiene, isoprene, etc.; vinyl chloride, vinylidene chloride, allyl chloride, allyl alcohol, etc.

At least one alkenyl group capable of undergoing hydrosilylation reaction is introduced into the acrylic polymer, preferably at a terminal position of the polymer, resulting from the copolymerization of these monomers. The introduced alkenyl group can be represented by the following general formula:

CH₂=C(R)-

where R is a hydrogen atom or an organic group having 1-20 carbon atoms. The organic group includes, for example, alkyl groups having 1-20 carbon atoms, aryl groups having 6-20 carbon atoms, aralkyl groups having 7-20 carbon atoms, etc. In view of the reactivity with the hydrosilyl group-containing compounds, an alkenyl group whose R is a hydrogen atom or a methyl group, preferably a hydrogen atom, is introduced.

Introduction of the alkenyl group can be carried out by the following methods:
(a) A method of allowing a compound having one alkenyl group of higher polymerizability and another alkenyl group of lower polymerizability together in the molecule, represented by the following general formula:

   CH₂=CR¹-R²-R³-CR¹=CH₂

   - R¹ :: a hydrogen atom or a methyl group
   - R² :: an ester group or an o-, m- or p-phenylene group where in case of an ester group, the compound is a (meth)acrylate-based compound and in case of a phenylene group, the compound is a styrene-based compound
   - R³ :: an organic group of C₁-C₂₀, which may be directly bonded or may have at least one ether bond,
   such as CH₂=CHCOO(CH₂)nCH=CH₂, CH₂=C(CH₃)COO(CH₂)nCH=CH₂, o-, m- or p-divinyl benzene, etc. to react with the desired acrylic monomer in the synthesis of acrylic polymers by living radical polymerization,
(b) A method of subjecting a compound having at least two alkenyl groups of lower polymerizability as a second monomer, that is, a compound represented by the following general formula:

   CH₂=CR¹-R⁴-CR¹=CH₂

   - R¹ :: a hydrogen atom or a methyl group
   - R⁴ :: an organic group of C₁-C₂₀, which may have at least one ether bond,
   such as 1,5-hexadiene, 1,7-octadiene, 1,9-decadiene, etc. to reaction at the final stage of polymerization reaction or after the completion of reaction of the desired monomer in the synthesis of acrylic polymers by living radical polymerization, the method being much easier of controlling the alkenyl groups to be introduced into one molecule, and
(c) A method of replacing the halogen atom in the acrylic polymer with an alkenyl group such as a method of replacing the halogen atom in the polymer with an alkenyl group by allowing various organometallic compounds having an alkenyl group to act on acrylic polymers having at least one halogen atom.

Number of alkenyl groups to be introduced into the acrylic polymers by these methods is 1-10, preferably 2-8 per polymer molecule.

Acrylic polymers having the alkenyl group for use in the present invention are generally in a liquid state at the ordinary temperature with a number average molecular weight Mn of 500 or more, preferably 1,000-100,000. The lower the molecular weight, the less appear the proper characteristics of the acrylic polymers, whereas the higher the molecular weight, the harder is the handling.

Molecular weight distribution of the acrylic polymers for use in the present invention, that is, a ratio of weight average molecular weight to number average molecular weight (Mw/Mn), determined by gel permeation chromatography (GPC), is generally 1.8 or less, preferably 1.5 or less, more preferably 1.3 or less. A ratio of more than 1.8 is not preferable because of lowering of physical properties, etc. In the molecular weight determination by GPC, chloroform was used as a mobile phase in a polystyrene gel column, where the determination was made in terms of polystyrene.

The alkenyl-containing acrylic polymers can be produced by various polymerization processes. Though the processes are not particularly limited, radical polymerization processes are preferable from the viewpoint of monomer versatility and easy control. Among the radical polymerization processes, a living polymerization process is more preferable, and an atom transfer radical polymerization process is particularly preferable.

Generally, it has been deemed that reaction control of the radical polymerization reaction is hard to conduct, because of higher polymerization rate and easy occurrence of termination reaction due to coupling of radicals themselves, whereas the living radical reaction process has such characteristics that it can hardly suffer from side reactions such as termination reactions at growing chain ends in the polymer, etc. owing to use of a special polymerization system, and also can produce polymers of narrow molecular weight distribution (Mw/Mn : about 1.1- about 1.5) and furthermore can freely control the molecular weight by a charging ratio of an initiator to monomers.

Thus, the living polymerization process can not only produce polymers of narrow molecular weight distribution and, furthermore, low viscosity, when the resulting polymers are in a liquid state, but can also introduce monomers having a specific functional group into the polymers at substantially desired positions, and thus can be regarded as a preferable process for producing alkenyl-containing acrylic polymers.

In a narrow sense, the living polymerization process refers to polymerization capable of keeping molecular chains to grow, while always maintaining the terminals in an active state, but generally also covers a pseudo-living polymerization capable of keeping the molecular chain to grow under an equilibrium state of both inactivated terminals and activated terminals as well. The term "living polymerization process" used in the present invention refers to the latter one.

Hydrosilyl group-containing compound as component (B) is not particularly limited, so long as it is a curable compound by cross-linking with an acrylic polymers having at least one alkenyl group at the terminals as component (A), and includes, for example, compounds represented by the following general fomulae:

R⁵ ₃SiO[SiR⁵ ₂O]a[SiHR⁶O]b[SiR⁶R⁷O]c SiR⁶ ₃

R⁵ ₂HSiO[SiR⁵ ₂O]a[SiHR⁶O]b[SiR⁶R⁷O]c SiHR⁵ ₂

- R⁵,: R⁶ : alkyl groups of C₁-C₆ or phenyl group
- R⁷ :: alkyl groups of C₁-C₁₀ or aralkyl groups
0≦a≦100
2≦b≦100
0≦c≦100 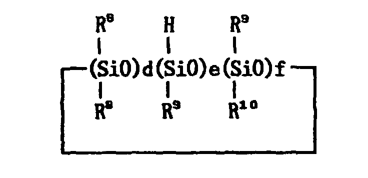
- R⁸, R⁹ :: alkyl groups of C₁-C₆ or phenyl group
- R¹⁰ :: alkyl groups of C₁-C₁₀ or aralkyl groups
0≦d≦8
2≦e≦10
0≦f≦8
3≦d+e+f≦10

Above all, compounds such as linear polysiloxanes, cyclic siloxanes, etc. having at least 1.1 hydrosilyl groups in the molecule on average can be preferably used. Siloxane compounds having an alkyl group, a phenyl group, an alkylphenyl group, etc. besides the hydrosilyl groups are more preferable from the viewpoint of compatibility with acrylic polymers. One or also a combination of at least two of the hydrosilyl group-containing compounds can be used in the present invention.

The alkenyl-containing acrylic polymer and the hydrosilyl group-containing compound can be used by mixing in a desired proportion, but in view of curability they are used in a molar ratio of the alkenyl group of acrylic polymer to the hydrosilyl group of hydrosilyl group-containing compound of 5-0.2, preferably 2.5-0.4. In a molar ratio of more than 5, only tacky cured products of low strength will be obtained due to incomplete curing, whereas in a molar ratio of less than 0.2, a large amount of active hydrosilyl groups will remain in the cured products even after the curing, and uniformly cured products of sufficient strength will be no more obtained due to generation of cracks or voids.

Hydrosilylation catalyst as component (C) is also not particularly limited, and any desired catalyst can be used. It includes, for example, chloroplatinic acid, simple platinum, solid platinum supported on carriers such as alumina, silica, carbon black, etc., furthermore the following complexes such as:
- Platinum-vinylsiloxane complexes:: Ptn(CH₂=CHMe₂SiOSiMe₂CH=CH₂)n
Pt[(MeCH=CHSiO)₄]m
- Platinum-phosphine complexes:: Pt(PPh₃)₄
Pt(PBu₃)₄
- Platinum-phosphite complexes:: Pt[P(OPh)₃]₄
Pt[P(OBu)₃]₄
Me : methyl
Bu : butyl
Ph : phenyl
n, m : positive integers
and other catalysts than the platinum compounds, e.g. RhCl(PPh₃)₃, RhCl₃, Rh/Al₂0₃, RuCl₃, IrCl₃, FeCl₃, AlCl₃, PdCl₂ · 2H₂0, NiCl₂, TiCl₄, etc. Furthermore, platinum-hydrocarbon complex (US Patent No. 3,159,601 and US Patent No. 3,159,662), platinum-alcoholato complex (US Patent No. 3,220,972), etc. can be also used in the present invention. These hydrosilylation catalyst can be used alone or in combination of at least two thereof. Among these hydrosilylation catalysts, chloroplatinic acid, platinum-olefin complexes, platinum-vinylsiloxane complexes, etc. are preferable used from the viewpoint of catalyst activity.

The amount of the catalyst is also not particularly limited, and is used in a range of 10⁻¹-10⁻⁸ moles, preferably 10⁻²-10⁻⁶ moles per mole of alkenyl group in the component (A) polymer. Generally, the hydrosilylation catalyst is expensive and corrosive, and sometimes can generate a large amount of hydrogen to produce foamed cured products. Thus, it is preferable not to use more than 10⁻¹ mole.

If any one of these three essential components (A), (B) and (C) is not used, such inconveniences will be encountered as failing to obtain vulcanization molding products (cured products) or lowering of rubber elasticity or elongation of the product even if obtained.

The composition comprising the afore-mentioned essential components can be admixed, if necessary, with various rubber compounding ingredients usually used in the rubber industries such as a reinforcing agent, e.g. carbon black, white carbon, etc.; a filler, e.g. diatomaceous earth, talc, clay, graphite, calcium silicate, barium sulfate, calcium carbonate, magnesium carbonate, aluminium hydroxide, mica, etc.; a powdery solid filler, e.g. various metal powders, glass powders, ceramic powders, granular or powdery polymer, etc.; a small amount of thermoplastic resin or rubber for improving the abrasion resistance, moldability, etc., short-length fibers for improving the strength or rigidity, a processing aid, e.g. stearic acid, palmitic acid, paraffin wax, etc.; an acid acceptor, e.g. zinc oxide, magnesium oxide, etc.; antioxidants of amine series, phenol series, imidazole series, etc; a stabilizer, a plasticizer, a tackifier, a mold release agent, a flame retardant, pigments, etc. It is preferable from the operational viewpoint to use liquid compounding ingredients.

The composition can be admixed with a curing-adjusting agent such as 3,5-dimethyl-1-hexyne-3-ol, 3,5-dimethyl-1-hexyne-5-ol, etc. in a proportion of not more than about 5 parts by weight, preferably about 0.01-about 1 part by weight, to 100 parts by weight of sum total of components (A), (B) and (C). The curing-adjusting agent has a function of adjusting the curing rate and preventing scorch.

For use as a cam cover sealing material and an oil pan sealing material, it is preferable that the surface hardness of the curing product layer obtained by curing the composition is not more than 45. The curing product can be made to have a low hardness of not more than 45 in terms of Duro A hardness (according to JIS K6253 corresponding to ISO48 and ISO7619) by adjusting proportions of various additives to the composition such as a reinforcing agent, a filler, a plasticizer, etc. in desired proportions, but even compositions without such various additives can give the surface hardness of desired low hardness. In this connection, reinforcing agent or the filler containing sulfur, halogen, etc. acting as a catalyst poison is not preferable.

For use as a sealing material for fuel cell cooling medium, the sealing material has a cross-sectional shape such as mountain-shaped, convex, semicircular or other shape to be fitted to the separator outer edges and is used in a pressed state between stacked separator-separator in contact with the cooling medium. The gasket for the cooling medium can be obtained by curing (vulcanization molding) of the composition comprising the component (A), component (B) and component (C) as essential components.

It is preferable that the curing product obtained by curing these components has a hardness of not more than 60 in view of use as a sealing material for the fuel cell cooling medium. The curing product can be made to have a low hardness of not more than 60 in terms of Duro A hardness in the manner as mentioned above.

For use as a wire harnesses sealing materials for automobiles, it is preferable that the surface hardness of curing product obtained by curing the composition is not more than 50. The curing product can be made to have a low hardness of not more than 50 in terms of Duro A hardness in the manner as mentioned above. More specifically, a proportion of a reinforcing agent or a filler to be added is not more than about 100 parts by weight, generally 1 to 100 parts by weight and preferably about 5 to about 80 parts by weight, on the basis of 100 parts by weight of the components (A), (B) and (C) in sum total. A proportion of less than 1 parts by weight or a zero proportion of the reinforcing agent or the filler is not preferable, because the appearance of the product will be spoiled, though the hardness of not more than 50 can be attained, whereas a proportion of more than 100 parts by weight makes the hardness too high. The hardness can be controlled by simultaneous use of a plasticizer, etc. together with the reinforcing agent or the filler.

The wire hardness sealing material is mainly used as a connector packing, a gasket, an O-ring, etc., and after vulcanization molding, the packing, etc. in desired shapes are fitted to resin-made housings, and electric wires coated with vinyl chloride resin, polypropylene resin, etc. are inserted therethrough. Penetration of water, dusts, oil, etc. to electric contacts from the connector outside while using the wire hardness can be effectively prevented thereby.

For use as a HDD cover gasket, it is preferable that the surface hardness of a curing product layer obtained by curing the composition is not more than 60. The curing product can be made to have a low hardness of not more than 60 in terms of Duro A hardness in the manner as mentioned above.

Vulcanization molding of the composition into a gasket is carried out by applying an adhesive of an epoxy resin series, etc. onto a metallic sheet, preferably electroless nickel-plated metallic sheet, as formed into a cover shape in advance, inserting the HDD cover into a mold and then injection molding the composition using a liquid injection molding machine to produce the HDD cover-integrated gasket.

To assure the sealability of a sealing material for the vibration-insulating HDD cover gasket, it is preferable that the hardness of the curing product is not more than 50. The curing product can be made to have a low hardness of not more than 50 in terms of Duro A hardness in the manner as mentioned above.

Vulcanization molding of the composition is carried out by applying an adhesive of an epoxy resin series, phenol resin series, etc. or a coupling agent of silane series, isocyanate series, etc. onto a metallic sheet, preferably electroless nickel-plated metallic sheet, as formed into a cover shape in advance, by a dipping method, a spray coating method, a screen printing method, a brushing method, a stamping method, etc., inserting the HDD cover into a mold, and then injection molding the composition using an injection molding machine, a compression molding machine, an extrusion molding machine, preferably a liquid injection molding machine to produce the HDD cover-integrated gasket.

Compositions for the above-mentioned uses can be prepared by kneading through a Banbury mixer, a planetary mixer, Brabender, a kneader, a high shearing type mixer, rolls, a three-roll mill, etc., and curing (vulcanization molding) of the compositions into the various sealing materials or gaskets is carried out by heating generally at about 100° ~ about 200°C for about 3 ~ about 120 minutes using an injection molding machine, a compression molding machine, a vulcanization press, etc. If required, a heat treatment by heating at about 120°C ~ about 200°C for about 1 ~ about 24 hours is also carried out. Curing is also possible by leaving the composition to stand at room temperature for 24 hours or more without any heating.

### BRIEF DESCRIPTION OF DRAWINGS

Fig. 1 is a perspective view showing a state of a gasket molded from the sealing material of the present invention as integrated with an HDD top cover.
Fig. 2 is a cross-sectional view along line A-A showing a state of the gasket integrated with the HDD top cover.
Fig. 3 is a cross-sectional view along line B-B showing a state of the gasket integrated with the HDD top cover.
Fig. 4 is a perspective view showing a mounting state of a conventional HDD cover.

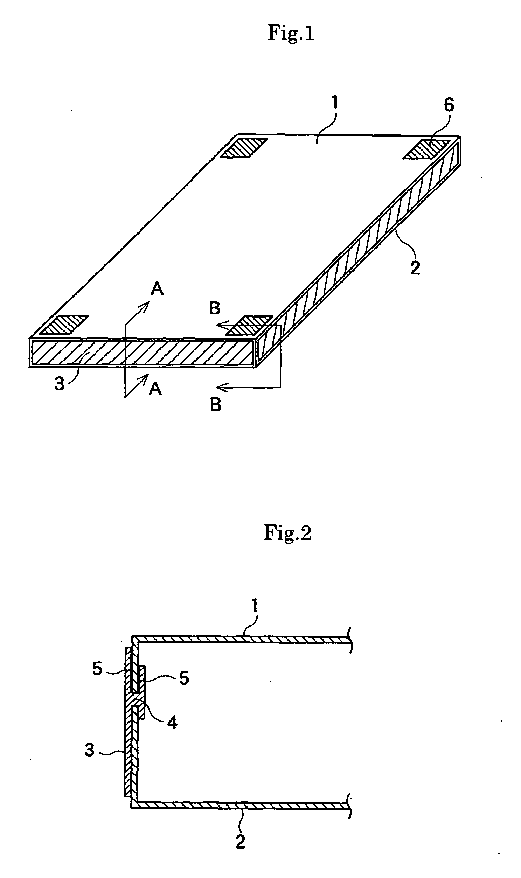

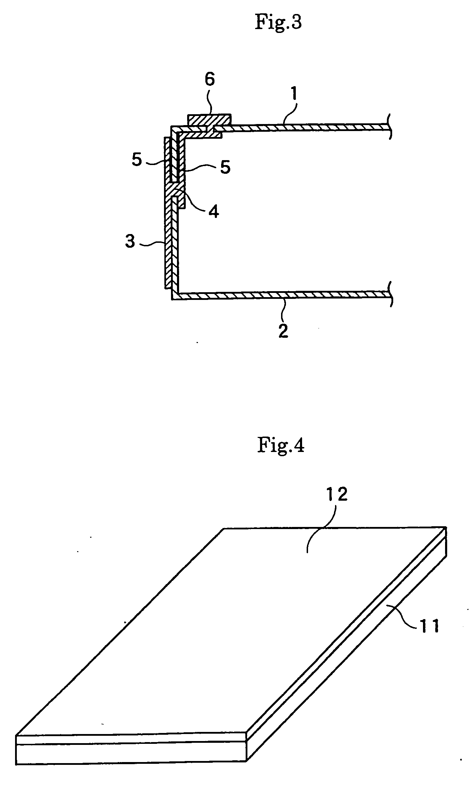

More specifically, as shown in the perspective view of Fig. 1 and cross-sectional views of gasket-fitted parts of Figs. 2 and 3, the gasket is used as integrated with the cover of an HDD casing. In the prior art, as shown in the perspective view of Fig. 4, metallic cover 12 is fitted simply to base 11, whereas the gasket molded from the present sealing material is fitted in such a state as to cover the entirety of side surfaces 3 consisting of side surfaces of top metallic cover 1 and side surfaces of bottom base 2.

Fitting of the gasket 3 is conducted by bonding a gasket in such a shape as to be extended over the back sides of the respective side surfaces through clearances 4 between the top cover side surfaces and the base side surfaces by an adhesive 5. At the same time, the gasket on the back sides of to the top cover side surfaces may be extended even to the back side of the top cover and passed through perforation 4' provided in the top cover, thereby integrating the passed-through gasket with vibration-insulating mat 6 on the top cover surface.

### BEST MODES FOR CARRYING OUT THE INVENTION

The present invention will be described below, referring to Examples.

### EXAMPLE 1

| | Parts by weight |
|---|---|
| Acrylic polymer | 100 |
| White carbon (Aerosil R974, product of Nihon Aerosil Co.; average particle size of primary Particles : 12nm) | 25 |
| Hydrosilyl group-containing compound | 6 |
| Hydrosilylation catalyst | 0.05 |
| Hardness-adjusting agent (3,5-dimethyl-1-hexine-3-ol; Surfinol 61, a product of Nisshin Kagaku K.K.) | 0.1 |
| Antioxidant (Irganox 1010, a product of Ciba Specialty Chemical Co.) | 2 |

The foregoing components were kneaded by a planetary mixer and a three-roll mill, and then subjected to press vulcanization (primary vulcanization) at 170°C for 20 minutes and oven vulcanization (secondary vulcanization) at 150°C for 10 hours to obtain a vulcanization sheet (150 × 150 ×2mm).

The acrylic polymer used herein was a copolymer comprising butyl acrylate, ethyl acrylate and 2-methoxyethyl acrylate, further copolymerized with 1,7-octadiene to introduce alkenyl groups therein, and having a number average molecular weight Mn of 18,000, a molecular weight distribution (Mw/Mn) of 1.1 and average number of alkenyl groups introduced into one molecule of the copolymer being 1.9. The hydrosilyl group-containing compound used herein was a linear siloxane having 5 hydrosilyl groups on average and 5 α-methylstyrene groups on average in one molecule (amount of Si-H groups : 3.70 m moles/g). The hydrosilylation catalyst used herein was a xylene solution containing 3 wt.% of 1,1,3,3-tetramethyl-1,3-divinylsiloxane complex of zero-valent platinum.

### EXAMPLE 2

In Example 1, the amount of white carbon was changed from 25 parts by weight to 10 parts by weight.

### COMPARATIVE EXAMPLE 1

In Example 1, the amount of white carbon was changed from 25 parts by weight to 40 parts by weight.

### COMPARATIVE EXAMPLE 2

| | Parts by weight |
|---|---|
| Acrylic rubber (PA402, a product of Unimatec Co.) | 100 |
| Carbon black (N550) | 30 |
| Stearic acid | 1 |
| Sulfur | 0.3 |
| Sodium stearate | 3 |
| Potassium stearate | 0.25 |
| Autioxidant (Nocrack CD, a product of Ouchi-Shinko Kagaku K.K.) | 2 |

The foregoing components were kneaded through a Banbury mixer and rolls, and then subjected to press vulcanization (primary vulcanization) at 170 °C for 15 minutes and then to oven vulcanization (secondary vulcanization) at 150°C for 10 hours to obtain a vulcanization sheet (150 × 150×2mm).

### COMPARATIVE EXAMPLE 3

In Comparative Example 2, 15 parts by weight of plasticizer (RS700, a product of Adeka Argus Co.) was additionally used.

### COMPARATIVE EXAMPLE 4

In Comparative Example 2, the amount of carbon black was changed from 30 parts by weight to 10 parts by weight.

Mixing-kneading and vulcanization of compositions of the foregoing Examples and Comparative Examples were carried out easily in Examples 1 ~ 2 and Comparative Examples 1 ~ 2, whereas in Comparative Example 3, vulcanization was carried out easily, but mixing-kneading was very hard to conduct, and in Comparative Example 4, mixing-kneading was carried out easily, but foaming was observed at the time of vulcanization.

The resulting vulcanization sheets were subjected to determination of the following items:
- Normal state physical properties :: according to JIS K6253 and JIS K 6251
- Heat resistance :: according to JIS K6257 (changes in physical properties by heating at 150°C for 70 hours)
- Compression set:: according to JIS K6262 corresponding to ISO815 (by heating at 150°C for 70 hours)
- Oil resistance :: according to JIS K6258 (changes in physical properties by heating at 150°C for 70 hours in lubricating oil No. 3)

The results are shown in the following Table 1.

In Comparative Example 4, foaming occurred at the time of vulcanization and no normal test pieces were obtained.

**Table 1**

| Deterimination items | Ex. 1 | Ex. 2 | Comp. Ex. 1 | Comp. Ex. 2 | Comp. Ex. 3 |
|---|---|---|---|---|---|
| [Normal state physical properties] | | | | | |
| Hardness (Durometer A) | 40 | 20 | 58 | 50 | 40 |
| Tensile strength (MPa) | 3.2 | 3.0 | 4.5 | 8.3 | 7.1 |
| Elongation (%) [Heat resistance] | 200 | 210 | 100 | 210 | 260 |
| Hardness change (points) Percent tensile strength | +1 | +3 | +7 | +5 | +1 |
| change (%) Percent elongation | +25 | +21 | +11 | +19 | +2 |
| change (%) [Compression set] | +8 | +6 | -35 | -33 | +5 |
| 150°C for 70 hours (%) [Oil resistance] | 29 | 30 | 32 | 28 | 35 |
| Hardness change (points) Percent tensile strength | -5 | -3 | -7 | -7 | -3 |
| change (%) Percent elongation | -6 | -9 | -8 | -15 | -13 |
| change (%) | -12 | -15 | -19 | -11 | -8 |
| Percent volume change (%) | +22.5 | +23.9 | +20.5 | +19.7 | +10.2 |

From the foregoing results, it is evident that the product materials of Examples have the same level heat resistance, compression set characteristics and oil resistance as those of acrylic rubber typically of Comparative Example 2, and enable low surface pressure sealing due to the lowered hardness and thus can be used as suitable sealing materials for automobile engine cam covers and oil pans, whereas in Comparative Examples 1 ~ 2, higher surface pressure is required for sealing because of the higher hardness and thus the product materials are a lower sealability than that of the Examples, and the product material of Comparative Example 3 has equivalent physical properties to those of the Examples, but has a lower kneadability due to the addition of the plasticizer.

To evaluate the sealability when used as sealing materials for the cam covers and the oil pans the following sealability evaluation test was conducted on the assumption of such uses.

A 6,6-nylon square case cover with the open bottom (20cm long, 20cm wide, 5cm high and 5mm thick) was placed on a steel base plate, and 4 corners at the outer flange of the case cover bottom were fixed to the base plate by bolts. A vulcanized O-ring of sealing material of Example 1 or 2, or Comparative Example 1 or 2 (ring wire diameter : 5.7mm, 10% compression) was inserted into square groove formed on the base plate surface at the contact surface between the outer flange of the case cover and the base plate to attain sealing.

Lubricating oil was filled into the case cover from an opening hole at the top of the case cover to about one-half of the case cover height, and the case inside was compressed up to pressure of 0.5MPa from the top opening hole and kept in the compressed state for about one hour. No lubricating oil leakage from the flange region (outer flange region of the case cover) was observed in case of sealing materials of Examples 1 ~ 2, whereas in case of Comparative Examples 1 ~ 2 clearances were formed in the flange region due to the camber force of the sealing materials and lubricating oil leakage was observed.

### EXAMPLE 3

The components as used in Example 1 was mixed together through a planetary mixer and a three-roll mill, left to stand at room temperature for 24 hours, and then subjected to press vulcanization at 180°C and 100MPa for 20 minutes to obtain test pieces.

### EXAMPLE 4

In Example 3, no white carbon was used.

### EXAMPLE 5

In Example 3, the amount of white carbon was changed from 25 parts by weight to 30 parts by weight.

### COMPARATIVE EXAMPLE 5

In Example 3, the amount of white carbon was changed from 25 parts by weight to 50 parts by weight.

### COMPARATIVE EXAMPLE 6

| | Parts by weight |
|---|---|
| Acrylic rubber (PA 402L, a product of Unimatec Co.) | 100 |
| White carbon (Aerosil R974) | 25 |
| Precipitated sulfur | 0.2 |
| Potassium stearate | 1.2 |
| Antioxidant (Irganox) | 2 |

The foregoing components were mixed together through a Banbury mixer and rolls, left to stand at room temperature for 24 hours and then subjected to press vulcanization at 180°C and 100 MPa for 15 minutes to obtain test pieces.

Pre-vulcanization mixtures and test pieces obtained in the foregoing Examples 3 ~ 5 and Comparative Examples 5 ~ 6 were subjected to determination of the following items to evaluate performance of sealing materials for fuel cell cooling medium.
- Viscosity :: The mixtures left to stand at room temperature for 24 hours are subjected to determination of viscosity in the unvulcanized state according to JIS K6300, and Mooney scorch (125°C) Vm value of less than 20 is evaluated as satisfactory (○) and the value of 20 or more is evaluated as unsatisfactory (×) (at 20 or more flaws will be formed on the gasket body, many burrs will be generated and molding of product will be hard to attain)
- Hardness :: 3 test sheets (each 2mm in thickness) are placed one upon another and subjected to determination according to JIS K6253 (ISO48 and ISO7619) (at a hardness of 60 or more, the gasket camber force will be higher when fitted to the fuel cell body, resulting in damages on the separator and consequent failure of complete tight sealing, and the gasket sealability will be poor)
- Compression camber force :: Camber force of a small test piece (13mm in diametor) according to JIS K 6262 at the time of compression is determined, and camber force of less than 0.4N at 50% compression is evaluated as satisfactory (○) and that of 0.4N or more is evaluated as unsatisfactory (×)
- Compression set:: Values after heating at 120°C for 168 hours according to JIS K6262 (ISO815) are determined, and values of less than 50% are evaluated as satisfactory (○) and those of 50% or more are evaluated as unsatisfactory (×)
- Gas permeability :: Gas permeation coefficient (unit : cm³·cm/cm²· sec·cmHg) of hydrogen at the ordinary temperature is determined according to JIS K 7126, and values of less than 1.0 ×10⁻⁸ are evaluated as satisfactory (○) and those of 1 ×10⁻⁸ or more are evaluated as unsatisfactory (×)
- Dipping test:: Test pieces are dipped into cooling medium silicone oil (KF-96-100cs, a product of Shin-Etsu Chemical Co.) at 120°C for 70 hours according to JIS K6258, and then percent volume changes of the dipped test pieces are measured, and values of less than 30% are evaluated as satisfactory (○) and those of 30% or more are evaluated as unsatisfactory (×)

Pre-vulcanization mixtures obtained in Examples 3 ~ 5 and Comparative Examples 5 ~ 6 were molded on the surface of a stainless steel (SUS303) plate fabricated to a thickness of 2mm and also on the surface of resin-impregnated type carbon material (IKC-33, a product of Toyo Carbon K.K.) under molding pressure of 200 Kgf/cm², using such a mold as to make the molding to have a shape of 1mm-high semi-circular cross-section to evaluate the moldability. When the lip height is 3mm or more, the volume at the time of lamination will be larger. Thus, this is not appropriate.
- Moldability :: Cases without in conveniences of failure in molding into desired product shapes such as occurrence of deformation, sinks, flaws, welds, short shots and burrs or appearance of phenomena incapable of cover-integrated molding are evaluated as satisfactory (○), and cases with such inconveniences are evaluated as unsatisfactory (×)

The results are shown in the following Table 2.

**Table 2**

| | Example | | | Comp. Ex. | |
|---|---|---|---|---|---|
| Determination item | 3 | 4 | 5 | 5 | 6 |
| [Test piece evaluation] | | | | | |
| Viscosity Vm | 9 | 9 | 10 | 11 | 28 |
| | ○ | ○ | ○ | ○ | × |
| Hardness (JIS Durometer A) | 31 | 12 | 48 | 65 | 48 |
| Compression camber force (kN) | 0.20 | 0.13 | 0.28 | 0.45 | 0.30 |
| | ○ | ○ | ○ | ○ | × |
| Compression set (%) | 32 | 28 | 30 | 32 | 26 |
| | ○ | ○ | ○ | ○ | ○ |
| Gas permeability (×10⁻⁹) | 6.0 | 5.2 | 5.1 | 5.1 | 4.6 |
| | ○ | ○ | ○ | ○ | ○ |
| Dipping test ΔV (%) | 16 | 16 | 15 | 15 | 13 |
| [Product evaluation] | ○ | ○ | ○ | ○ | ○ |
| Moldability | ○ | ○ | ○ | ○ | × |

### EXAMPLES 6 ~ 9 AND COMPARATIVE EXAMPLE 7

| Composition components | Comp. | | | | |
|---|---|---|---|---|---|
| (parts by weight) | Ex. 6 | Ex. 7 | Ex. 7 | Ex. 8 | Ex. 9 |
| Acrylic polymer | 93.9 | 93.9 | 93.9 | 93.9 | 93.9 |
| Hydrosilyl group-containing compound | 5.6 | 5.6 | 5.6 | 5.6 | 5.6 |
| Hydrosilylation catalyst | 0.05 | 0.05 | 0.05 | 0.05 | 0.05 |
| Carbon black (N990) | 5 | 25 | 120 | | |
| White carbon (Aerosil R974) | | | | 5 | 18 |
| Antioxidant (Nocrack CD, a product of Ouchi-Shinko Kagaku K.K.) | 1 | 1 | 1 | 1 | 1 |
| Polyetherester-based plasticizer (RS700, a product of Asahi Denka Kogyo K.K.) | | 5 | 5 | | |
| 3,5-dimethyl-1-hexine-3-ol (Hardness-adjusting agent) | 0.1 | 0.1 | 0.1 | 0.1 | 0.1 |

The same acrylic polymer, hydrosilyl group-containing compound and hydrosilylation catalyst as in Example 1 were used.

The foregoing components were thoroughly mixed together through a three-roll mill and then subjected to vulcanization molding at 180°C for 10 minutes by a compression molding machine. The resulting vulcanization molding products were subjected to determination of the following items.

Normal state values, compression set, heat resistance test (changes in physical properties by heating at 150°C for 70 hours) and oil resistance test (changes in physical properties by heating in lubricating oil No.3 at 150°C for 70 hours) : according to JIS K6253, K6251, K6262, K6257 and K6258

Tight adhesiveness test : A perforation, 2mm in diameter, is made through a cylinder (10mm in diameter and 10mm in height) at the center thereof as assumed as a connector packing, and an electric wire (3mm in outer diameter) is passed through the perforation, and subjected to stretching, bending or heat load (at 120°C for 168 hours) and then, the electric wire is manually drawn out of the perforation. Cases that the electric wire fails to be drawn therefrom are evaluated as satisfactory (○), and cases that the electric wire is drawn therefrom are evaluated as unsatisfactory (×)

Out gassing property test : according to GCMS procedure (amount of generated gas per g of test piece after heated extraction at 120°C for one hour)

Metal corrosion test : O-ring (3mm in wire diameter and 25mm in inner diameter) is sandwiched between aluminum plates, and subjected to heating at 100 °C for 168 hours and then, the corrosion state of the aluminum plates is visually observed

### COMPARATIVE EXAMPLE 8

| | Parts by weight |
|---|---|
| Acrylic rubber (Nipol AR 72HF, a product of Nippon Zeon Co.) | 100 |
| Sulfur | 0.5 |
| Sodium stearate | 1 |
| Potassium stearate | 2 |
| Stearic acid | 1 |

The foregoing components were thoroughly mixed together through a three-roll mill, and subjected to vulcanization molding at 180°C for 6 minutes by a compression molding machine, followed by secondary vulcanization at 150°C for 5 hours. The resulting vulcanization molding product was tested in the same manner as in Examples 6 ~ 9.

### COMPARATIVE EXAMPLE 9

| | Parts by weight |
|---|---|
| Silicone rubber (VMQ:SE8311CVU; a product of Toray Silicone Co.) | 100 |
| Red pigment (CP21 RED, a product of Toray Silicone Co.) | 2 |
| Organic peroxide (RC4, a product of Toray Silicone Co., 50% SiO₂ dilution in 2,5-dimethyl-2,5-di-tert. butyl peroxyhexane) | 1 |

The foregoing components were thoroughly mixed together through a three-roll mill, and subjected to vulcanization molding at 180°C for 6 minutes by a compression molding machine, followed by secondary vulcanization at 200°C for 22 hours. The resulting vulcanization molding product was tested in the same manner as in Examples 6 ~ 9.

Results of determination in the foregoing Examples 6 ~ 9 and Comparative Examples 8 ~ 9 are shown in the following Table 3.

**Table 3**

| | Comp. | | | | | Comp. | Comp. |
|---|---|---|---|---|---|---|---|
| Determination item | Ex.6 | Ex.7 | Ex.7 | Ex.8 | Ex.9 | Ex.8 | Ex.9 |
| [Normal state value] | | | | | | | |
| Hardness | 10 | 40 | 72 | 12 | 32 | 42 | 30 |
| Duro A (Points) | | | | | | | |
| Breaking strength (MPa) | 4.2 | 7.0 | 9.6 | 3.9 | 4.8 | 1.6 | 6.2 |
| Breaking elongation (%) | 280 | 200 | 105 | 300 | 210 | 120 | 460 |
| [Compression set] | | | | | | | |
| 150°C for 70 hours (%) | 12 | 19 | 42 | 14 | 22 | 64 | 28 |
| [Heat resistance test] | | | | | | | |
| Change in hardness | | | | | | | |
| (Points) | +3 | +2 | +2 | +4 | +2 | +5 | +2 |
| Percent breaking | | | | | | | |
| strength change (%) | +10 | +5 | +16 | +12 | +4 | -19 | +8 |
| Percent breaking | | | | | | | |
| elongation change (%) | +6 | +9 | -18 | -7 | -12 | -20 | -6 |
| [Oil resistance test] | | | | | | | |
| Change in hardness | | | | | | | |
| (Points) | -5 | -3 | -2 | -5 | -4 | -6 | -14 |
| Percent breaking | | | | | | | |
| strength change (%) | -16 | -12 | -23 | -18 | -15 | -30 | -36 |
| Percent breaking | | | | | | | |
| elongation change (%) | -18 | -19 | -26 | -13 | -12 | -39 | -47 |
| Percent volume | | | | | | | |
| change (%) | +18.0 | +15.2 | +14.8 | +19.1 | +17.3 | +19.6 | +62.0 |
| [Tight adhesiveness test] | | | | | | | |
| After stretching | ○ | ○ | ○ | ○ | ○ | × | ○ |
| After bending | O | ○ | × | ○ | ○ | × | × |
| After heat load | ○ | ○ | ○ | ○ | ○ | × | × |
| [Out gassing property] | | | | | | | |
| Amount of generated gas (µg/g) | 40 | 24 | 18 | 38 | 26 | 80 | 62 |
| [Metal corrosiveness] | | | | | | | |
| Occurrence of corrosion | none | none | none | none | none | occurred | none |

It is evident from the foregoing that the vulcanization molding products obtained from the compositions of Examples 6 ~ 9 have a low hardness, good heat resistance and oil resistance, a good tight adhesiveness to the electric wires and a low out gassing property, and can be used as suitable wire harnesses sealing materials for automobiles, whereas that of Comparative Example 7 has a high hardness and a poor tight adhesiveness to the electric wire, that of Comparative Example 8 using acrylic rubber has low practical strengths and a poor compression set characteristic and furthermore a poor tight adhesiveness to the electric wire, and that of Comparative Example 9 using silicone rubber has a good heat resistance, but a poor oil resistance and furthermore a poor tight adhesiveness to the electric wire.

### EXAMPLE 10

At the time of mixing of components of Example 1, white carbon was added to the acrylic polymer, followed by thorough mixing through a three-roll mill. Then, a hydrosilyl group-containing compound (linear siloxane) was added to the acrylic polymer in such an amount as to make 1.8 equivalent amount of SiH groups in the linear siloxane to the alkenyl group of acrylic polymer, and furthermore a hardness-adjusting agent (sulfinol 61) was added thereto in an amount of 30 ×10⁻⁴ molar equivalent to the alkenyl group of acrylic polymer, and still furthermore a solution of hydrosilylation catalyst in xylene (1.32×10⁻⁵ milli moles/µl) was added thereto in an amount of 5 ×10⁻⁴ molar equivalent in terms of platinum to the alkenyl group of acrylic polymer, followed by further uniform mixing.

### EXAMPLE 11

In Example 10, no white carbon was used.

### EXAMPLE 12

In Example 10, the amount of white carbon was changed from 25 parts by weight to 60 parts by weight.

### COMPARATIVE EXAMPLE 10

In Example 10, the amount of white carbon was changed from 25 parts by weight to 80 parts by weight.

### COMPARATIVE EXAMPLE 11

In Example 10, 80 parts by weight of MT carbon black (Thermax N990, a product of CANCARB Co.) was used in place of the white carbon.

The mixtures obtained from Examples 10 ~ 12 and Comparative Examples 10 ~ 11 were each left to stand at room temperature for 24 hours to conduct deforming, and then poured into test sheet molds (150 × 150×2mm) and subjected to compression molding at 180°C and 100MPa for 10 minutes. The resulting sheets were subjected to determination of hardness, compression set and out gassing property.
- Hardness :: Two test sheets are placed one upon another and determination is made according to JIS K6253 (ISO48 and ISO7619)
(When the hardness is 70 or more, a camber force exerted on a cover-integrated gasket fitting to the body becomes larger, resulting in deformation of the cover, etc., leading to failure of complete sealing and poor sealability as a gasket, whereas when the hardness is not more than 10, the gasket will be torn off easily or become sticky easily, so attention must be paid to the handling. Thus, the hardness of curing products is set to not more than 60, preferably 10-60, more preferably 20-45)
- Compression set:: After heating at 120°C for 168 hours,
determination is made according to JIS K6262 (ISO815), and values of less than 50% are evaluated as satisfactory (○) and those of 50% or more are evaluated as unsatisfactory (×)
- Out gassing property :: A strip-shaped test piece (50 ×3 ×2mm) is subjected to heated extraction at 120°C for one hour to determine an out gassing amount, and amounts of less than 50 µg/g are evaluated as satisfactory (○) and those of 50 µg/g or more are evaluated as unsatisfactory (×) (those evaluated as unsatisfactory (×) are not preferable for use as HDD gaskets)

An aluminum sheet (treated by electroless nickel plating to a thickness of 2~5µm), as formed into a cover shape in advance, was coated with an epoxy resin-based adhesive (Three-Bond 2202, a product of Three-bond Co.) and inserted into a mold, and then a gasket was injection-molded using injection molding machine onto the aluminum cover as an HDD cover placed in the mold at a set temperature of 210° ~180°C, injection pressure of 100MPa and an injection speed of 0.5 seconds with a cycle time of 30 seconds to produce a cover-integrated gasket. The resulting gasket products were subjected to determination or evaluation of sealability, adhesiveness and moldability.
- Sealability test:: The cover-integrated gasket is set to an actual leak tester, subjected to heat treatment at 80°C for 168 hours and then returned to room temperature, while applying a positive pressure of 5kPa thereto continuously for 30 seconds from the tester inside, occurrence of leakage is investigated after 15 seconds from the initiation of positive pressure application, and absence of leakage is given as ○, whereas occurrence of leakage as × (in case that a gasket material has a poor compression set characteristic or in case that the gasket shape is defected, leakage occurs)
- Adhesiveness test:: A penetration peel (about 1mm in width) is formed on the gasket bond surface of a cover-integrated gasket, and a vertically stretching load is applied thereto via a stainless steel (SUS) wire engaged with the penetration peel. The load when the peel length is elongated to about 10mm is measured as a peel load. Peel load of 100kPa or more is evaluated as satisfactory (○) and that of less than 100kPa is evaluated as unsatisfactory (×) (those with a peel load of 100kPa or more have a satisfactory adhesive force in the actual use circumstances)
- Moldability test:: Cases without inconveniences of failure in molding into desired product shapes such as occurrence of deformation, sinks, flaws, welds, short shots and burrs or appearance of phenomena incapable of cover-integrated molding are evaluated as satisfactory (○), and cases with such inconveniences are evaluated as unsatisfactory (×) (in case of using no adhesive, peeling occurred at the time of molding, resulting in failure of integrated molding)

Results of determination and evaluation obtained in the foregoing Examples 10 ~ 12 and Comparative Examples 10 ~11 are shown in the following Table 4.

**Table 4**

| Determination evaluation item | Ex.10 | Ex.11 | Ex.12 | Comp.Ex.10 | Comp.Ex.11 |
|---|---|---|---|---|---|
| [Test piece] | | | | | |
| Hardness | 31 | 12 | 48 | 70 | 65 |
| (Durometer A) | | | | | |
| Compression set | ○ | ○ | ○ | ○ | ○ |
| Out gassing property | ○ | ○ | ○ | ○ | ○ |
| [Product] | | | | | |
| Sealability test | ○ | ○ | ○ | × | × |
| Adhesiveness test | ○ | ○ | ○ | ○ | ○ |
| Moldability evaluation | ○ | ○ | ○ | ○ | ○ |

### EXAMPLE 13

Mixing of the individual components was carried out in the same manner as in Example 10.

### EXAMPLE 14

In Example 13, no white carbon was used.

### EXAMPLE 15

In Example 13, the amount of white carbon was changed from 25 parts by weight to 30 parts by weight.

### COMPARATIVE EXAMPLE 12

In Example 13, the amount of white carbon was changed from 25 parts by weight to 50 parts by weight.

### COMPARATIVE EXAMPLE 13

In Example 13, 80 parts by weight of MT carbon black (Thermax N990, a product of CANCARB Co.) was used in place of the white carbon.

Mixtures obtained in the foregoing Examples 13 ~ 15 and Comparative Examples 12 ~ 13 were each left to stand at room temperature for 24 hours to conduct deforming, and poured in test sheet molds (150×150×2mm) and subjected to compression molding at 180°C and 100MPa for 10 minutes. The resulting sheets were subjected to determination of hardness, compression set and out gassing property in the same manner as in Example 6, and also subjected to determination of tan δ before and after heated aging test.

Initial tan δ : Determination is carried out in a visco-elasticity meter at frequencies of 10Hz and 100Hz, an initial strain of 10% at 25°C in a compression measurement mode, and tan δ values of 0.5 or more at frequencies 10Hz and 100Hz are evaluated as satisfactory (○) and those of less than 0.5 were evaluated as unsatisfactory (X)

Tan δ after heat aging test : Test sheets were heated at 120°C for 168 hours, then left to stand at room temperature, and determination and evaluation of tan δ were carried out in the same manner as in the case of initial tan δ.

An aluminum sheet (treated by electroless nickel plating to a thickness of 2~5 µm), as formed into a cover shaps in advance, was coated with an epoxy resin-based adhesive (Three-Bond 2202, a product of Three-Bond Co.) and inserted into a mold, and then a gasket was injection-molded using injection molding machine onto the aluminum cover as an HDD cover placed in the mold at a set temperature of 210° ~180°C, injection pressure of 100MPa and an injection speed of 0.5 seconds with a cycle time of 30 seconds to produce a cover-integrated gasket. The resulting gaskets products were subjected to determination and evaluation of sealability and moldability in the same manner as in Examples 10 ~ 12.

Results of determination and evaluation obtained in the foregoing Examples 13 ~ 15 and Comparative Examples 12 ~ 13 are shown in the following Table 5.

**Table 5**

| Determination* evaluation item | Ex.13 | Ex.14 | Ex.15 | Comp.Ex.12 | Comp.Ex.13 |
|---|---|---|---|---|---|
| [Test piece] Hardness | 31 | 12 | 48 | 70 | 68 |
| (Durometer A) | | | | | |
| Compression set | ○ | ○ | ○ | ○ | ○ |
| Out gassing property | ○ | ○ | ○ | ○ | ○ |
| Vibration insulation | | | | | |
| Initial | ○ | ○ | ○ | ○ | ○ |
| After heat aging test | ○ | ○ | ○ | ○ | ○ |
| [Product] | | | | | |
| Sealability test | ○ | ○ | ○ | × | × |
| Moldability evaluation | ○ | ○ | ○ | ○ | ○ |

### INDUSTRIAL UTILITY

(1) Curing products of the present sealing material have a low Duro A hardness of 45 or less, and can attain sealing under low surface pressure when used as a cam cover seal, and thus can be used as suitable cam cover gaskets.
(2) Curing products of the present sealing material have a low Duro A hardness of 45 or less and can attain sealing under low surface pressure when used as an oil pan seal for automobile engines, enabling the seal to be easily exchanged.
(3) Pre-cross-linking compositions of the present sealing material have a low viscosity and curing products obtained by curing the compositions have a low hardness and a low camber force, and also have distinguished gas shieldability, cooling medium oil resistance, etc. and can be used as an effective sealing material for the cooling medium in fuel cells requiring down-sizing as in automobile mounting, etc. and being used in high temperature circumstances.
(4) The present sealing material for automobile wire harnesses has such effects as (a) distinguished heat resistance, oil resistance and ozone resistance due to the use of acrylic rubber, (b) distinguished tight adhesiveness to electric wires and less cracking due to the use of acrylic rubber of low hardness, (c) easy molding work due to the use of liquid acrylic rubber and omission of kneading step, different from the conventional millable type rubber, (d) good cleanliness (low out gassing property) and low compression set characteristic due to hydrosilylation cross-linking without using a vulcanizing agent as in the conventional acrylic rubber, etc.
(5) The present HDD cover gasket has such characteristics as a high sealability, a low out gassing property, etc. at high temperatures for a long time on the performance and thus can be used as a suitable dust-proof gasket for hard discs, etc., and particularly more suitable for hard discs for use under conditions requiring higher performance (higher rpm) or in high temperature circumstances of automobile mounting.
   Thus, the present HDD cover gasket can attain simplification of production steps (easy fabrication) and improvements in heat resistance, sealability, out gassing property, quality, etc. at the same time as a gasket to be fitted to the HDD cover in the precision device field requiring a lower camber force and better cleanliness for the sealing purpose of electronic devices, particularly for preventing penetration of moisture, dusts, etc.
(6) The present HDD cover gasket molded from the present sealing material has such characteristics as a high sealability, a low out gassing property, etc. at high temperatures for a long time on the performance and thus can be used as a suitable dust-proof gasket for hard discs, etc., and particularly due to the distinguished vibration insulation it can be more suitable for hard discs for use under conditions requiring higher performance (higher rpm) or in high temperature circumstances of car mounting.

Thus, such a vibration-insulating HDD cover gasket can attain simplification of production steps (easy fabrication) and improvements in heat resistance, vibration insulation, heat resistance, sealability, out gassing property, quality, etc. at the same time as a gasket to be fitted to the HDD cover in the precision device field requiring a lower camber force and better cleanliness, preferably as a HDD casing cover-integrated gasket for the sealing purpose of electronic devices, particularly for preventing penetration of moisture, dust, etc.

## Claims

1. A sealing material, which comprises a curing product of a composition comprising (A) an acrylic polymer having at least one alkenyl group capable of undergoing hydrosilylation reaction, (B) a hydrosilyl group-containing compound and (C) a hydrosilylation catalyst as essential components.

2. A sealing material according to Claim 1, for use in sealing automobile engine cam covers.

3. A sealing material for cam covers according to Claim 2, where a liquid acrylic polymer having a number average molecular weight Mn of 500 or more and a molecular weight distribution (Mw/Mn) of 1.8 or less is used as component (A) of the composition.

4. A sealing material for cam covers according to Claim 2, where the curing product of the composition has a Duro A hardness of 45 or less.

5. A sealing material for cam covers according to Claim 2, for use in resin-made cam covers.

6. An automobile engine cam cover sealed by a sealing material for cam cover according to Claim 2.

7. A sealing material according to Claim 1, for use as a sealing material for automobile engine oil pans.

8. A sealing material for oil pans according to Claim 7, wherein a liquid acrylic polymer having a number average molecular weight Mn of 500 or more and a molecular weight distribution (Mw/Mn) of 1.8 or less is used as component (A) of the composition.

9. A sealing material for oil pans according to Claim 7, wherein the curing product of the composition has a Duro A hardness of 45 or less (according to JIS K6253).

10. Automobile engine oil pans sealed by a sealing material for oil pans according to Claim 7.

11. A sealing material according to Claim 1, for use in sealing a fuel cell cooling medium.

12. A sealing material for sealing a fuel cell cooling medium according to Claim 11, wherein an acrylic polymer having a number average molecular weight Mn of 500 or more and a molecular weight distribution (Mw/Mn) of 1.8 or less is used as component (A) of the composition.

13. A sealing material for a fuel cell cooling medium according to Claim 11, wherein the curing product of the composition has a Duro A hardness of 60 or less (according to JIS K6253).

14. A sealing material for a fuel cell cooling medium according to Claim 11, as molded to total seal height of 3mm or less.

15. A sealing material according to Claim 1, for use in automobile wire harnesses.

16. A sealing material for automobile wire harnesses according to Claim 15, wherein a liquid acrylic polymer having a number average molecular weight Mn or 500 or more and a molecular weight distribution (Mw/Mn) of 1.8 or less is used as component (A) of the composition.

17. A sealing material for automobile wire harnesses according to Claim 15, wherein the curing product of the composition has a Duro A hardness of 50 or less (according to JIS K6253).

18. A sealing material for automobile wire harnesses according to Claim 15 or 17, wherein not more than 100 parts by weight of a reinforcing agent or a filler is added to the composition on the basis of 100 parts by weight of sum total of components (A), (B) and (C).

19. Automobile wire harnesses sealed by a sealing material for wire harnesses according to Claim 15.

20. An HDD cover gasket, which comprises a curing product of a composition comprising (A) an acrylic polymer having at least one alkenyl group capable of undergoing hydrosilylation reaction, (B) a hydrosilyl group-containing compound and (C) a hydrosilylation catalyst as essential components.

21. An HDD cover gasket according to Claim 20, wherein a liquid acrylic polymer having a number average molecular weight Mn of 500 or more and a molecular weight distribution (Mw/Mn) of 1.8 or less is used as component (A) of the composition.

22. An HDD cover gasket according to Claim 20, wherein the curing product of the composition has a Duro A hardness of 60 or less (according to JIS K6253).

23. An HDD cover gasket according to Claim 20, wherein the curing product of the composition has a compression set of 50% or less (120°C for 168 hours according to JIS K6262).

24. An HDD cover gasket according to Claim 20, for use in HDD for mounting on automobiles.

25. A sealing material according to Claim 1, for use as a vibration-insulating seal of HDD cover gasket.

26. A sealing material for vibration-insulating HDD cover gasket according to Claim 25, wherein a liquid acrylic polymer having a number average molecular weight Mn of 500 or more and a molecular weight distribution (Mw/Mn) of 1.8 or less is used as component (A) of the composition.

27. A sealing material for vibration-insulating HDD cover gasket according to Claim 25, wherein the curing product of the composition has a Duro A hardness of 50 or less (according to JIS K6253).

28. A sealing material for vibration-insulating HDD cover gasket according to Claim 25, wherein the curing product of the composition has a compression set of 50% or less (120°C for 168 hours according to JIS K 6262).

29. A sealing material for vibration-insulating HDD cover gasket according to Claim 25, wherein the curing product of the composition has a loss tangent tan δ of 0.5 or more at room temperature.

30. A sealing material for vibration-insulating HDD cover gasket according to Claim 25, wherein the gasket molded from the composition is integrated with an HDD casing cover.

31. A sealing material for vibration-insulating HDD cover gasket according to Claim 25 or 30, for use in HDD for mounting on automobiles.
